# EUROPEAN PATENT APPLICATION

(11) **EP 4 800 448 A1**
(43) Date of publication of application: **02.09.2026**
(21) Application number: 25160800.6
(22) Date of filing: 28.02.2025
(51) Int. Cl.: G02B 6/12, G02B 1/00, G02B 6/136, G02B 6/14, G02B 6/30

(54) **SURFACE COUPLING AND OPTICAL BEAM EXPANSION SYSTEM IN A PHOTONIC INTEGRATED CIRCUIT**

(71) Applicant: Imec VZW, 3001 Leuven (BE)
(72) Inventor: Luo, Cheng-Jhih, 3010 Leuven (BE); Weng, Chia-Ning, 3001 Heverlee (BE); Van Campenhout, Joris, 3001 Leuven (BE); Chakrabarti, Maumita, 3010 Kessel - lo (BE); Shimura, Yosuke, 3000 Leuven (BE); Lepage, Guy, 3201 Langdorp (BE)
(74) Representative: Roth, Sebastian

(57) **Abstract**

The disclosure relates to an integrated photonic chip (10) for optical coupling. The photonic chip comprises a substrate (11), a spot size converter (12) formed on a frontside surface of the substrate (11), a mirror (13) formed on the frontside surface of the substrate, and a meta-lens (14) formed in or on a backside surface of the substrate (11). The spot size converter (12) enlarges a diameter of a light beam in the photonic chip (10) from a smaller mode size to a larger mode size. The mirror receives the larger mode size light beam (15a) from the spot size converter (12), and reflects the light beam at an angle into the substrate. The meta-lens collimates the light beam (15b) reflected by the mirror and expanded when passing through the substrate, and outputs the collimated light beam (15c) towards the optical device.

## Description

### TECHNICAL FIELD

The present disclosure relates to photonic chips or integrated circuits (PICs) and optical coupling. The disclosure provides an integrated photonic chip for optically coupling to an optical device, for example, to an optical fiber device or an optical device with an on-device waveguide. The photonic chip of the present disclosure employs surface coupling and optical beam expansion.

### BACKGROUND

Optical input/output (I/O) and interconnection technologies aim to enhance signal transmission between integrated circuit (IC) nodes. To achieve this, vertically stacked assemblies for both electrical and optical components are implemented at wafer level. Ultimately, the transmitted signals may be delivered to a fiber array connector for long-distance transmission. The coupling interface between a photonic chip (also referred to as PIC) and a fiber array connector is crucial for ensuring low-loss, reliable packaging.

Conventional surface-coupling approaches for PICs often rely on fiber grating couplers, which are inherently limited by their optical spectral bandwidth and small mode field diameter for single mode operation. A promising alternative is optical beam expansion, which enlarges and collimates the light beam from the PIC before reaching the fiber array connector. Expanding the beam diameter - often to tens of microns - increases mechanical alignment tolerances, and thus facilitates pluggable designs. Also the overall robustness and performance is improved.

However, conventional beam expansion techniques often require complex processing and bonding steps during fabrication, and usually do not employ full wafer-level integration flows.

### SUMMARY

In view of the above, this disclosure has the objective to provide an integrated photonic chip for surface coupling and using beam expansion. A full wafer-level integration flow is desired. Moreover, an objective is to avoid optical spectral bandwidth issues.

These and other objectives are achieved by the solutions of this disclosure, which are described in the independent claims. Advantageous implementations are described in the dependent claims.

A first aspect of this disclosure provides an integrated photonic chip (also referred to as PIC) for optically coupling to an optical device, the integrated photonic chip comprising: a substrate; a spot size converter formed on a frontside surface of the substrate, and configured to enlarge a diameter of a light beam in the photonic chip from a smaller mode size to a larger mode size; a mirror formed on the frontside surface of the substrate, and configured to receive the larger mode size light beam from the spot size converter and reflect the light beam at an angle into the substrate; a meta-lens formed in or on a backside surface of the substrate, and configured to collimate the light beam, which is reflected by the mirror and expanded when passing through the substrate, and output the collimated light beam towards the optical device.

Accordingly, this disclosure proposes a novel surface-coupling interface between the photonic chip of the first aspect and the optical device, wherein the optical device may be a fiber array connector. According to a solution of this disclosure, the mirror is integrated with the meta-lens to implement a micro-optical beam expansion and collimation system. This can be achieved by a integration flow and leads to enhanced coupling performance of the photonic chip. Moreover, spot size conversion is enabled as well. Separately defining the spot size converter and the mirror offers good system flexibility, for instance, on the choice of waveguide material, and allows mode field shaping for the beam expansion.

The mirror and meta-lens fabrication can, respectively, be well integrated into silicon photonics process flows. If the mirror is fabricated from silicon, a good angle control of the mirror angles is possible, and a cost effective process flow can be set up.

In an implementation, the photonic chip further comprises a first anti-reflection layer arranged in the optical path of the light beam between the spot size converter and the mirror; and/or a second anti-reflection layer arranged in or on the backside surface of the substrate.

Generally, a respective anti-reflection layer could be integrated at any interface between any different materials in the photonic chip of the first aspect, in order to enhance the efficiency.

In an implementation of the photonic chip, the spot size converter and the mirror are embedded in a dielectric layer, which is arranged on the frontside surface of the substrate.

In an implementation of the photonic chip, the mirror is made of crystalline silicon, for example, epitaxial silicon or a silicon part of the substrate.

In this way, better mirror angle control capability, and a cost effective process flow are enabled.

In an implementation of the photonic chip, the mirror comprises a first vertical surface facing the spot size converter and a first sloped surface facing away from the spot size converter.

In an implementation of the photonic chip, the first anti-reflection layer is an anti-reflection coating provided on the first flat surface and facing the spot size converter.

In an implementation of the photonic chip, the mirror comprises a second vertical surface facing away from the spot size converter and a second sloped surface facing the spot size converter, wherein the first and the second sloped surface are arranged between the first and the second vertical surface.

In an implementation of the photonic chip, an angle between respectively the first vertical surface and the first sloped surface and/or the second vertical surface and the second sloped surface is determined by a crystalline orientation of the mirror material and/or is in a range of 35°-45°.

For example, the angle may be determined by a crystalline orientation of the mirror material, for instance, being epitaxial silicon. As specific examples, the angle can be 35.27° or the angle can be 45°. The crystalline orientation ensures good angle forming accuracy, which bring benefits to the system control.

In an implementation of the photonic chip, the spot size converter comprises a tapered waveguide or a wavefront shaping element; and/or the spot size converter is made of silicon nitride or silicon or silicon oxynitride.

The spot size converter and mirror may be defined separately in the fabrication process flow, for instance, as proposed in this disclosure. This offers a better mode-field shape engineering capability to the beam expansion system.

In an implementation of the photonic chip, the meta-lens comprises a periodic patterning of the backside surface of the substrate.

In an implementation, the photonic chip further comprises at least one alignment structure arranged on or formed in the backside surface of the substrate; wherein the at least one alignment structure is configured to align the photonic chip with the optical device.

A second aspect of this disclosure provides a system comprising the integrated photonic chip according to the first aspect and the optical device, wherein the optical device comprises: at least one alignment structure configured to align the optical device with the photonic chip; and a collimation lens arranged to, when the optical device is aligned with photonic chip, receive the collimated light beam output by the photonic chip and focus the light beam into an optical fiber or an on-device waveguide of the optical device.

The system of the second aspect enjoys the advantages of the photonic chip of the first aspect. In particular, it enables surface coupling between the photonic chip and the optical device, wherein high mechanical alignment tolerance and coupling efficiency is achieved.

A third aspect of this disclosure provides a method for fabricating an integrated photonic chip according to the first aspect, the method comprising: providing the substrate; forming the spot size converter and the mirror on the frontside surface of the substrate; and forming the meta-lens in or on the backside surface of the substrate.

The method of the third aspect enables an integration flow, for example, for full wafer level processing of the photonic chip of the first aspect, enabling its backside emission. The process flow allows for a silicon nitride (SiN) waveguide and for a spot size converter for better mode filed diameter (MFD) control.

In an implementation of the method, forming the mirror comprises: forming a trench through a dielectric layer, which is formed on the frontside surface of the substrate, onto the substrate or forming a trench into the substrate; wherein the substrate is made of silicon; if the trench is formed through the dielectric layer, epitaxially growing crystalline silicon into the trench; wet etching the epitaxially grown silicon grown into the trench or wet etching the silicon substrate comprising the trench, to form at least one sloped surface of the mirror; and coating the at least one sloped surface of the mirror with a reflective coating.

The mirror is accordingly formed on the frontside of the substrate.

In an implementation of the method, forming the meta-lens comprises: forming a resist layer on the backside surface of the substrate; patterning the resist layer, for example, by nano-imprinting; and etching the patterned resist layer to form a structure for the meta-lens in the backside surface of the substrate.

The method of the third aspect may have further implementations that correspond to the implementations of the photonic chip of the first aspect. The method of the third aspect and its implementations achieve the effects and advantages described above with respect to the photonic chip of the first aspect and its implementations.

In summary, a photonic chip for improved optical coupling is proposed according to the above aspects and implementations.

In the photonic chip, a photonic spot size converter is used to enlarge the MFD of the light. The spot size converter can be implemented by photonic waveguide tapering, or wavefront shaping techniques. The material of the spot size converter may be SiN or Si, but is not limited to that.

Further, an anti-reflection layer, which may be a single or multi-layer anti-reflection coating, can be used. For example, it may be designed for a certain operating wavelength (e.g., the O band, with a center wavelength at 1310 nm) and propagation direction. The material choice for the anti-reflection layer includes SiN, TiO, and others.

Further, a reflection mirror is employed, which may be fabricated by a combination of crystalline silicon epitaxy and anisotropic wet etching (such as with KOH and TMAH). Chemical mechanical polishing (CMP) may be applied after the epitaxy, for flattening the mirror surfaces. A thickness of the silicon epitaxy material of the mirror may determine the mirror height, and the crystalline orientation of the mirror material may determine the mirror angle with respect to a vertical axis (aligned with the epitaxial growth direction).

Further, a substrate is used as carrier for the optical elements of the photonic chip. For matching a target propagation distance for beam expansion of the light field, processing steps of polishing, thinning, or depositing additional material, may be performed.

An optical meta-lens of the photonic chip may be based on silicon, and is used as collimation lens. The meta-lens process could be in the backside of the substrate. The position of the meta-lens may be determined by the optical system design for optimizing the relative position to the mirror.

### BRIEF DESCRIPTION OF THE DRAWINGS

The above described aspects and implementations are explained in the following description of embodiments with respect to the enclosed drawings:
- FIG. 1: shows an exemplary photonic chip according to this disclosure, with integrated spot size converter, mirror, and meta-lens.
- FIG. 2: shows an exemplary photonic chip according to this disclosure, with anti-reflection layer(s).
- FIG. 3: shows an exemplary system according to this disclosure, including a coupled photonic chip and optical device.
- FIG. 4: shows a sequence of events regarding a light beam in the photonic chip.
- FIG. 5: shows a flow-chart of a general method for fabricating a photonic chip according to this disclosure.
- FIG. 6: shows exemplary steps for processing the meta-lens of the photonic chip.
- FIG. 7: shows exemplary steps for processing the meta-lens of the photonic chip.
- FIG. 8: shows exemplary steps for processing the mirror of the photonic chip.
- FIG. 9: (a) shows the simulated intensity profile of the light field for the cross-section view of the photonic chip shown in FIG. 2, and (b) and (c) shows the efficiency spectrum for the mirror, indicating what portion of the light is vertically reflected.
- FIG. 10: shows an exemplary photonic chip according to this disclosure, with a mirror formed in a substrate.

Notably, same elements in the figures are labelled with the same reference signs and may be implemented likewise.

### DETAILED DESCRIPTION OF EMBODIMENTS

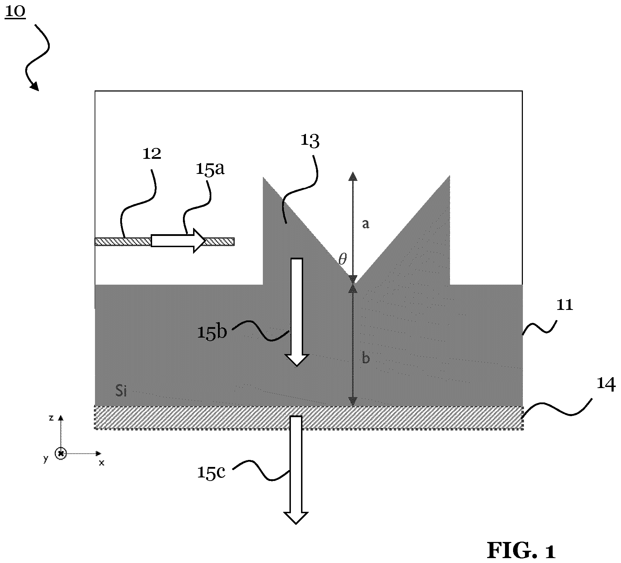

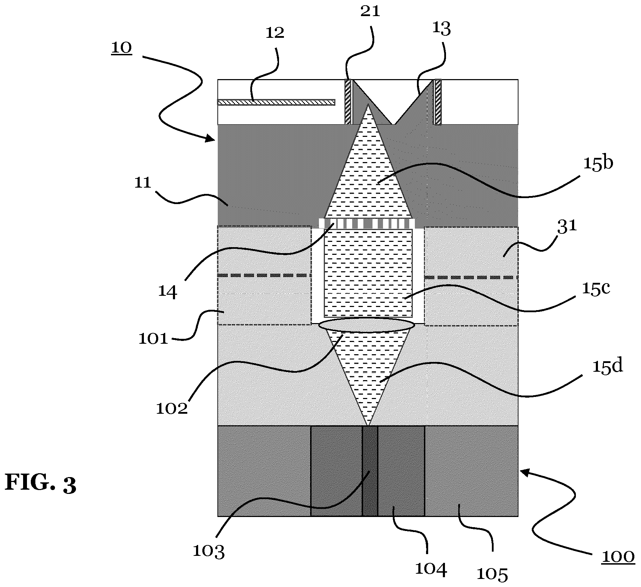

FIG. 1 shows an integrated photonic chip 10 according to this disclosure. The photonic chip 10 is configured to optically couple to an optical device (not shown in FIG. 1, but shown in FIG. 3 as optical device 100). The optical device 100 may be a fiber array connector, or a fiber device, or a device with a waveguide, wherein light from the photonic chip 10 is eventually coupled to the fiber array, fiber, or waveguide of the optical device 100.

A photonic chip, or photonic integrated circuit (PIC), is a microchip that integrates optical components - such as waveguides, lasers, modulators, and detectors - to process and transmit information using light instead of electricity. Similar to electronic integrated circuits (ICs), photonic chips enable high-speed data transfer, lower power consumption, and miniaturized optical systems for applications in telecommunications, data centers, sensing, and quantum computing.

The photonic chip 10 of this disclosure comprises a substrate 11, a spot-size converter 12 formed on a frontside surface of the substrate 11, a mirror 13 formed on the frontside surface of the substrate 11, and a meta-lens 14 formed in or on a backside surface of the substrate 11. The substrate 11 may be a silicon substrate or wafer. The frontside and backside surface of the substrate 11 are two opposite surfaces of the substrate 11. The frontside may naturally be accessible for processing the spot size converter 12 and mirror 13 (e.g., being the exposed top surface of a wafer), while the backside surface may be accessible or is first formed by processing steps like thinning, before processing the meta-lens 14. The spot size converter 12 and mirror 13 may be, at least partly, embedded in a dielectric layer, which is arranged on the frontside surface of the substrate 11.

The spot size converter 12 is configured to enlarge a diameter of a light beam 15a in the photonic chip 10 - schematically depicted by the arrow - from a smaller mode size to a larger mode size. The spot size converter 12 may be used to gradually enlarge the diameter of, e.g., to gradually expand the optical mode. To this end, the spot size converter 12 may comprise a tapered waveguide or a wavefront shaping element. The spot size converter 12 may be made of silicon nitride or silicon or silicon oxynitride.

The mirror 13 is configured to receive the larger mode size light beam 15a from the spot size converter 12, and to reflect the light beam 15a at an angle into the substrate 11. The angle may be about 90°, but can also be smaller, for instance, between 10-90°. When passing through the substrate 11, the light beam 15a expands, and the expanded light beam 15b reaches the meta-lens.

The meta-lens 14 is configured to collimate the expanded light beam 15b, which was reflected by the mirror 13, and to output the collimated light beam 15c towards the optical device. The meta-lens 14 may make use of a nanostructured meta-surface to manipulate the light beam 15b at subwavelength scales. For instance, the meta-lens 14 may comprise a periodic patterning of the backside surface of the substrate 11 as such meta-surface. The nanostructured meta-surface may control phase, polarization, and/or apply wavefront shaping of the light, to collimate the light beam 15c.

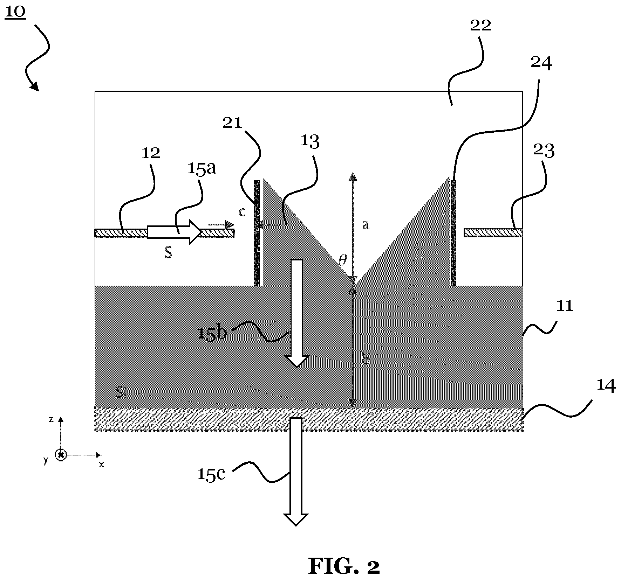

FIG. 2 shows an exemplary photonic chip 10 according to this disclosure, which is based on the photonic chip 10 of FIG. 1.

The photonic chip 10 of FIG. 2 further comprises a first anti-reflection layer 21, which is arranged in the optical path of the light beam 15a between the spot size converter 12 and the mirror 13. With the anti-reflection layer 21, back-reflection can be controlled.

As an example, as illustrated, the mirror 13 may comprise a first vertical surface facing the spot size converter 12 and a first sloped surface facing away from the spot size converter 12. In this case, the first anti-reflection layer 21 can be an anti-reflection coating, which is provided on the first flat surface and facing the spot size converter 12.

The mirror 13 may further comprise a second vertical surface facing away from the spot size converter 12 and a second sloped surface facing the spot size converter 12. The first and the second sloped surface are arranged between the first and the second vertical surface in this case. The mirror 13 may be symmetrical. A further anti-reflection layer 24 can be provided on the second flat surface and facing away from the spot size converter 12. It could face another spot size converter 23 on the other side of the mirror 13.

A first angle of the mirror 13 may be defined between the first vertical surface and the first sloped surface. A second angle of the mirror 13 may be defined between the second vertical surface and the second sloped surface. The first and/or second angle may respectively be determined by a crystalline orientation of the mirror material and/or may respectively be in a range of 35°-45°. The first and second angle of the mirror 13 are typically equal.

The mirror 13 may made of crystalline silicon, for example, epitaxial silicon (e.g. grown onto the substrate 11 or into a trench of the substrate 11), or a silicon part of the substrate 11 (e.g., formed from the substrate 11).

The photonic chip 10 may also comprise a further anti-reflection layer arranged in or on the backside surface of the substrate 11 (not shown in FIG. 2).

The spot size converter 12 and the mirror 13 are, in the example of FIG. 2, embedded in a dielectric layer 22 arranged on the frontside surface of the substrate 11. The dielectric layer 22 may be made of silicon dioxide.

For example, FIG. 2 may show an exemplary structure of the photonic chip 10, in which total internal reflection (TIR) is utilized for a silicon mirror 13 with an interface of Si/SiO2. The material of the spot size converter 12 may be SiN.

The coupling to the optical device (not shown in FIG. 2, but see FIG. 3) may be implemented by backside coupling, wherein the light propagates through the silicon substrate 11. The following table summarizes some possible parameter ranges for the structure of the photonic chip 10. The ranges are determined from simulation results, which showed good coupling performance.

| Parameters | Value | Unit |
|---|---|---|
| *a* | 3.5 ~14 | micrometer |
| *b* | 150~400 | micrometer |
| *c* | 0~1.5 | micrometer |
| *S* | Light field direction | none |
| SiN width | 200~300 | nanometer |
| SiN height | 200~300 | nanometer |
| ARC thickness | 100~200 | nanometer |
| *θ* | 45 or 35.26 | degree |

The parameter *a* is, as shown in FIG. 2, the height of the mirror 13 from the frontside surface of the substrate 11, and is given in µm.

The parameter *b* is, as shown in FIG. 2, the thickness of the substrate 11, and is given in µm.

The parameter *c is,* as shown in FIG. 2, the distance of the anti-reflection layer 21 to the (near end of) the spot size converter 12, and is given in µm.

The parameter *S* denotes the direction of the light field, indicated by the arrows in FIG. 2.

The SiN width is the width of the spot-size converter 12, and is given in nm (direction along the y-axis of the illustrated coordinate system in FIG. 2).

The SiN height is the width of the spot-size converter 12, and is given in nm (direction along the z-axis of the illustrated coordinate system in FIG. 2).

The ARC thickness is the thickness of the anti-reflection layer 21, and is given in nm (direction along the x-axis of the illustrated coordinate system in FIG. 2).

The angle *θ* is the above-mentioned angle defined between the vertical and sloped surface(s) of the mirror 13, is shown in FIG. 2, and is given in degree.

FIG. 3 shows a system comprising the integrated photonic chip 10 according this disclosure, e.g. as described above, and the optical device 100.

The optical device 100 comprises at least one alignment structure 101, which is configured to align the optical device 100 with the photonic chip 10. Similarly, the photonic chip 10 may comprise at least one alignment structure 34, which is arranged on or formed in the backside surface of the substrate 11, and is configured to align the photonic chip 10 with the optical device 100.

As shown in FIG. 3, the optical device 100 further comprises a collimation lens 102, which is arranged to - when the optical device 100 is aligned with the photonic chip 10 as illustrated - receive the collimated light beam 15c output by the photonic chip 10, and focus the light beam 15d into an optical fiber 103 (illustrated) or an on-device waveguide of the optical device 100 (not shown). The optical fiber 103 may comprise a cladding 104, and a core 103 between the cladding 104, and a coating 105 around the cladding 104.

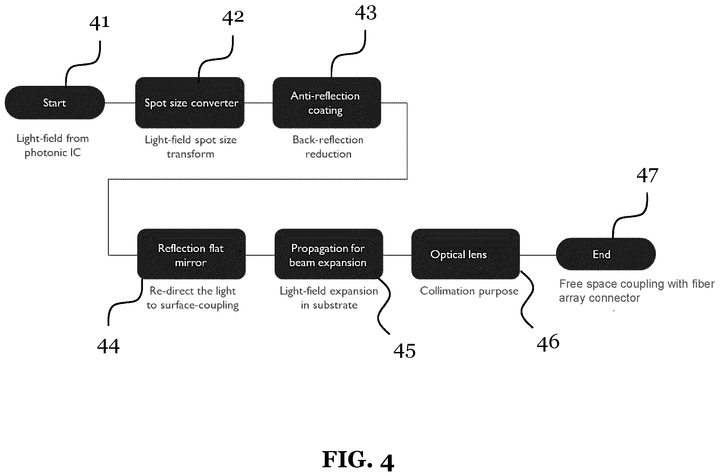

FIG. 4 explains a general functioning of the photonic chip 10 from the perspective of the light. Initially (block 41) there is a light-field from the photonic chip 10, e.g., the light beam 15a may be generated and/or transmitted in the photonic chip 10.

Then (block 42) the optical light field confined in the photonic chip 10, e.g. in a waveguide thereof, is launched into the spot size converter 12 for enlarging the light mode field diameter (MFD). The enlarged MFD and its intensity distribution are determined by the dimension of the spot size converter 12 and its material.

The optical light field is set to propagate through the anti-reflection layer 21 (block 43), e.g., formed as a dielectric thin-film layer. The layer 21 is designed as an anti-reflection coating layer for reducing the reflection between different material interfaces, especially of a silicon/ silicon oxide interface (Si/SiO2).

The optical light field then hits the mirror 13 (block 44), which reflects the light toward a certain direction, for example, for surface-coupling towards the backside surface of the substrate 11. The material of the mirror 13 may be presented by crystalline silicon, and the angle of the mirror 13 may be determined by the silicon lattice orientations during the fabrication process. The mirror 13 may be able to perform almost wavelength independent reflection, so that the system can break through spectral bandwidth limitations. A metal coating can optionally be applied for the protection of the mirror surface.

Because the light MFD from the spot size converter 12 is small, the light exhibits large divergence after the reflection. The light can propagate in the substrate 11 for expanding the light MFD (block 45).

The expanded light beam is then collimated by the optical meta-lens 14 (block 46), and may then be output from the photonic chip 10 for free space coupling between the photonic chip 10 and the optical device 100, for instance a fiber array connector.

Notably, due to the reciprocal property of the light field, the photonic chip 10 can also receive optical signals from the optical device 100, e.g. the fiber array connector, i.e., the interface can be adapted as both transceiver and receiver.

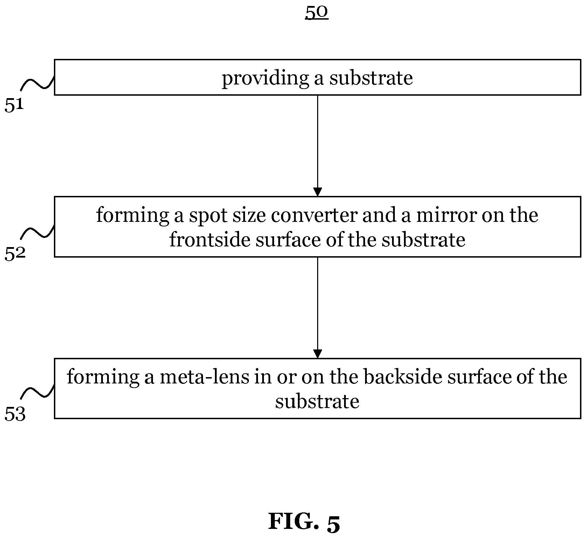

FIG. 5 shows a flow-chart of a general method 50 for fabricating the photonic chip 10. The method 50 comprises a step 51 of providing the substrate 11 , a step 52 of forming the spot size converter 12 and the mirror 13 on the frontside surface of the substrate 11, and a step 53 of forming the meta-lens 14 in or on the backside surface of the substrate 11. Possible implementation details are described in the following.

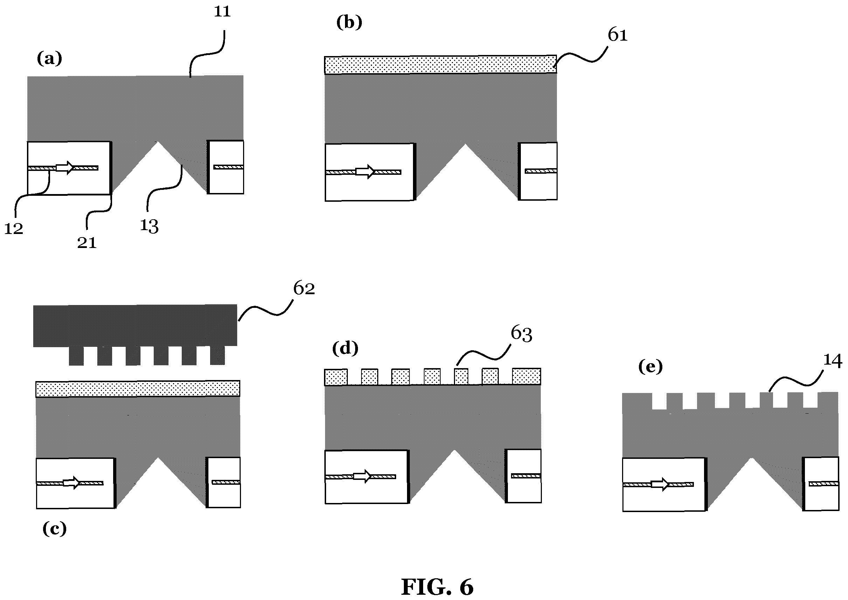

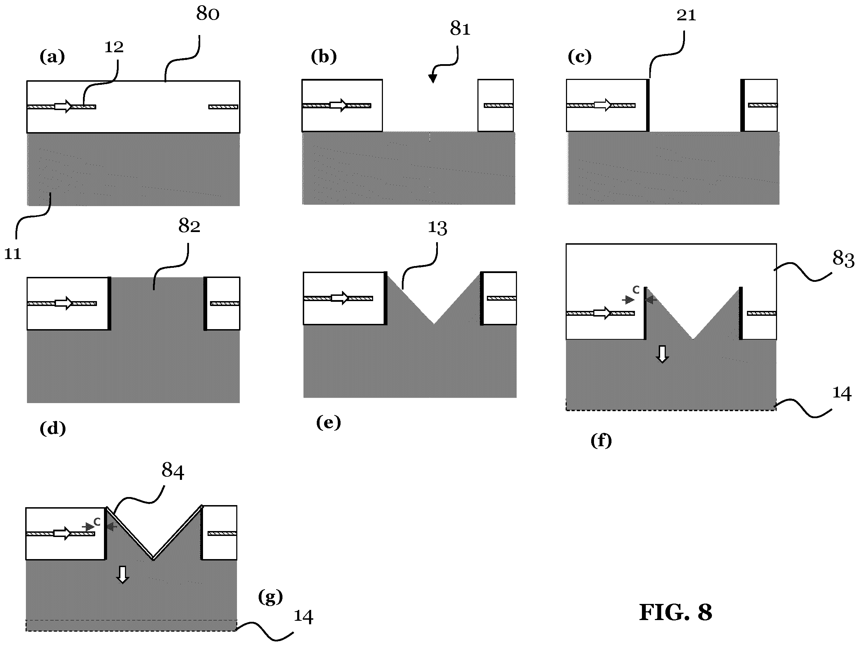

FIG. 6 shows exemplary steps for processing the meta-lens 14 of the photonic chip 10. FIG. 6(a) assumes that the frontside processing of the spot size converter 12 and the mirror 13, in this case with the anti-reflection layer 21, is already done. How it is done will be described with respect to FIG. 8. Notably, the backside processing of FIG. 6 could be done before the frontside processing of FIG. 8 as well.

According to FIG. 6, forming the meta-lens 14 comprises a step of forming a resist layer 61 on the backside surface of the substrate 11, as shown in FIG. 6(b). The resist layer 61 may be spin-coated onto the substrate 11. Then, it comprises a step of patterning the resist layer 61, for example, by nano-imprinting 62, as shown in FIG. 6(c). Nano-imprinting is a high-precision lithographic technique to create nanoscale patterns (e.g., a periodic pattern) on surfaces by mechanically pressing a structured mold onto a material (here onto the resist). Further, the processing of the meta-lens 14 includes a step of etching the patterned resist layer 63 (shown in FIG. 6(d)) to form a structure for the meta-lens 14 in the backside surface of the substrate 11 (shown in FIG. 6(e)). The etching can be a dry etch.

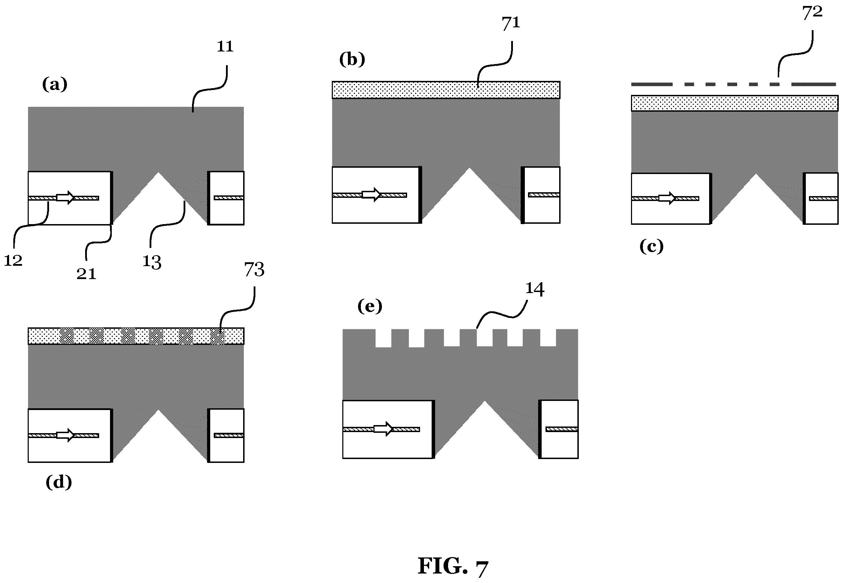

FIG. 7 also shows exemplary steps for processing the meta-lens 14 of the photonic chip 10, wherein FIG. 7 shows an alternative processing to FIG. 6. FIG. 7(a) again assumes that the frontside processing of the spot size converter 12 and the mirror 13, in this case with the anti-reflection layer 21, is already done. How it is done will be described with respect to FIG. 8. Notably, the backside processing of FIG. 7 could be done before the frontside processing of FIG. 8 as well.

According to FIG. 7, forming the meta-lens 14 comprises again a step of forming a resist layer 71 on the backside surface of the substrate 11, as shown in FIG. 7(b). The resist layer 71 may be spin-coated onto the substrate 11. Then, it comprises a step of patterning the resist layer 71, for example, in this case by photo-lithography using a mask, as shown in FIG. 7(c). This is followed by a step of developing the resist (after illumination through the mask), as shown in FIG. 7(d), wherein the resist layer 71 is patterned. The patterned resist layer 73 may further be used as a hard mask to pattern the substrate backside surface into the structure for the meta-lens 14, as shown in FIG. 7(e).

FIG. 8 shows exemplary steps for processing the mirror 13 of the photonic chip 10. The processing includes a step of forming a trench 81 through a dielectric layer 80, which is formed on the frontside surface of the substrate 11 (see FIG. 8(a) and (b)), onto the substrate 11. Alternatively, the trench can be formed into the substrate 11 (not shown). The substrate 11 is made of silicon.

If the trench 81 is formed through the dielectric layer 80, as illustrated in FIG. 8(b), then the anti-reflection layer 21 can be formed on the exposed sidewalls of the dielectric layer 80 within the trench 81, as shown in FIG. 8(c). Further, crystalline silicon 82 can be epitaxially grown into the trench 81, as shown in FIG. 8(d). Then, the epitaxially grown silicon 82 can be wet etched to form at least one sloped surface of the mirror 13, as shown in FIG. 8(e).. Further, the mirror 13 can be refilled with dielectric material 83, as shown in FIG. 8(f), and/or can be coated with a reflective coating 84 also acting as protection, as shown in FIG. 8(g).

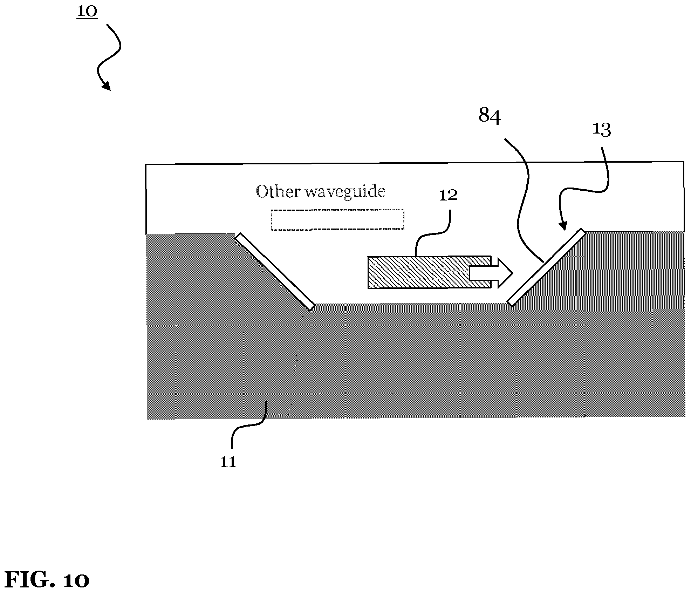

Alternatively, if the trench 81 was formed into the substrate 11, the silicon substrate 11 comprising the trench 81 can be wet etched, to form the at least one sloped surface of the mirror 13. A possible resulting structure with the spot size converter 12 and mirror 13 comprising reflective coating 84 is shown in FIG. 10.

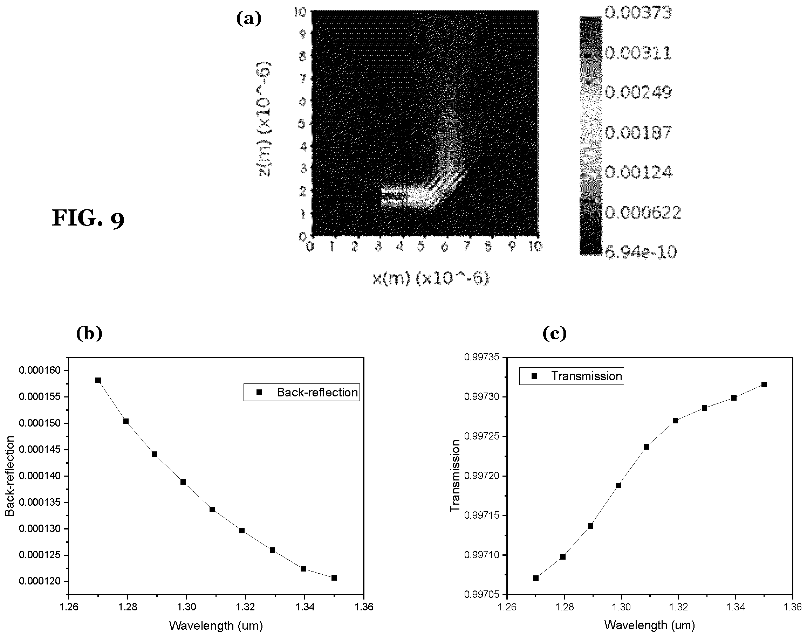

For verification of the photonic chip 10, a serious of simulations based on finite-difference time domain (FDTD) have been carried out. FIG. 9(a) shows the simulated intensity profile of the light field for the cross-section view of the photonic chip 10 shown in FIG. 2. Notice that the z-direction is flipped for keeping positive propagation direction in the modelling. Basically, it can be seen that the light-field is reflected vertically when the mirror 13 is set in 45°.

FIG. 9(b) shows the efficiency spectrum for the mirror 13, which indicates what portion of the light is vertically reflected. Most light is reflected effectively, the loss at wavelength of 1310 nm is only 0.03 dB. FIG. 9(c) shows the back-reflection spectrum. With single or double layers for optimizing the anti-reflection layer 21, the back-reflection can be controlled. Notice that the efficiency spectrum shows a very flat spectrum with almost wavelength independent tendency.

For characterizing the photonic chip 10 experimentally, a free space optical detector can be used to measure the light field intensity. The far field measurement or conversion can also be conducted for defining the divergence of the light field. The relevant parameters may include the mode-field diameter, divergence, integrated power, and intensity distribution of the light field. A tunable laser source and precise multi-axis tunable stages may be used to set up the measurement.

In summary, this disclosure a novel surface-coupling interface between a photonic chip 10 and an optical device 100, like a fiber array connector, is proposed. The approach of this disclosure is to integrate a photonic waveguide reflection mirror 13 with a micro-optical collimation meta-lens 14, in order to provide a more compact photonic chip 10 with improved coupling performance, and a simplified integration flow to fabricate the photonic chip 10.

In the claims as well as in the description of this disclosure, the word "comprising" does not exclude other elements or steps and the indefinite article "a" or "an" does not exclude a plurality. A single element may fulfill the functions of several entities or items recited in the claims. The mere fact that certain measures are recited in the mutual different dependent claims does not indicate that a combination of these measures cannot be used in an advantageous implementation.

## Claims

1. An integrated photonic chip (10) for optically coupling to an optical device, the integrated photonic chip (10) comprising:
a substrate (11);
a spot size converter (12) formed on a frontside surface of the substrate (11), and configured to enlarge a diameter of a light beam (15a) in the photonic chip (10) from a smaller mode size to a larger mode size;
a mirror (13) formed on the frontside surface of the substrate (11), and configured to receive the larger mode size light beam (15a) from the spot size converter (12) and reflect the light beam (15a) at an angle into the substrate (11);
a meta-lens (14) formed in or on a backside surface of the substrate (11) , and configured to collimate the light beam (15b), which is reflected by the mirror (13) and expanded when passing through the substrate (11), and output the collimated light beam (15c) towards the optical device.

2. The photonic chip (10) according to claim 1, further comprising:
a first anti-reflection layer (21) arranged in the optical path of the light beam (15a) between the spot size converter (12) and the mirror (13); and/or
a second anti-reflection layer arranged in or on the backside surface of the substrate (11).

3. The photonic chip (10) according to claim 1 or 2, wherein the spot size converter (12) and the mirror (13) are embedded in a dielectric layer (22), which is arranged on the frontside surface of the substrate (11).

4. The photonic chip (10) according to one of the claims 1 to 3, wherein the mirror (13) is made of crystalline silicon, for example, epitaxial silicon or a silicon part of the substrate (11).

5. The photonic chip (10) according to one of the claims 1 to 4, wherein the mirror (13) comprises a first vertical surface facing the spot size converter (12) and a first sloped surface facing away from the spot size converter (12).

6. The photonic chip (10) according to claim 5 and 2, wherein the first anti-reflection layer (21) is an anti-reflection coating provided on the first flat surface and facing the spot size converter (12).

7. The photonic chip (10) according to claim 5 or 6, wherein the mirror (13) comprises a second vertical surface facing away from the spot size converter (12) and a second sloped surface facing the spot size converter (12), wherein the first and the second sloped surface are arranged between the first and the second vertical surface.

8. The photonic chip (10) according to one of the claims 5 to 7, wherein an angle between respectively the first vertical surface and the first sloped surface and/or the second vertical surface and the second sloped surface is determined by a crystalline orientation of the mirror material and/or is in a range of 35°-45°.

9. The photonic chip (10) according to one of the claims 1 to 8, wherein:
the spot size converter (12) comprises a tapered waveguide or a wavefront shaping element; and/or
the spot size converter (12) is made of silicon nitride or silicon or silicon oxynitride.

10. The photonic chip (10) according to one of the claims 1 to 9, wherein the meta-lens (14) comprises a periodic patterning of the backside surface of the substrate (11).

11. The photonic chip (10) according to one of the claims 1 to 10, further comprising
at least one alignment structure (34) arranged on or formed in the backside surface of the substrate (11);
wherein the at least one alignment structure (34) is configured to align the photonic chip (10) with the optical device (100).

12. A system comprising the integrated photonic chip (10) according to one of the claims 1 to 11 and the optical device (100), wherein the optical device (100) comprises:
at least one alignment structure (101) configured to align the optical device (100) with the photonic chip (10); and
a collimation lens (102) arranged to, when the optical device (100) is aligned with the photonic chip (10), receive the collimated light beam (15c) output by the photonic chip (10) and focus the light beam (15d) into an optical fiber (103) or an on-device waveguide of the optical device (100).

13. A method (50) for fabricating an integrated photonic chip (10) according to one of the claims 1 to 11, the method (50) comprising:
providing (51) the substrate (11);
forming (52) the spot size converter (12) and the mirror (13) on the frontside surface of the substrate (11); and
forming (53) the meta-lens (14) in or on the backside surface of the substrate (11).

14. The method (50) according to claim 13, wherein forming the mirror (13) comprises:
forming a trench (81) through a dielectric layer (80), which is formed on the frontside surface of the substrate (11), onto the substrate (11) or forming a trench (81) into the substrate (11);
wherein the substrate (11) is made of silicon;
if the trench (81) is formed through the dielectric layer (80), epitaxially growing crystalline silicon (82) into the trench (81);
wet etching the epitaxially grown silicon (82) grown into the trench (81) or wet etching the silicon substrate (11) comprising the trench (81), to form at least one sloped surface of the mirror (13); and
coating the at least one sloped surface of the mirror (13) with a reflective coating.

15. The method (50) according to claim 13 or 14, wherein forming the meta-lens (14) comprises:
forming a resist layer (61, 71) on the backside surface of the substrate (11);
patterning the resist layer (61, 71), for example, by nano-imprinting (62); and
etching the patterned resist layer (63, 73) to form a structure for the meta-lens (14) in the backside surface of the substrate (11).
